# FASCICULE DE BREVET EUROPEEN

(11) **EP 1 778 434 B1**
(45) Date de publication et mention de la délivrance du brevet: **13.02.2008**
(21) Numéro de dépôt: 05789854.6
(22) Date de dépôt: 05.07.2005
(51) Int. Cl.: B23Q 5/34, B23Q 1/48, B25J 9/10, B23Q 16/02

(54) **DISPOSITIF DE TRANSFERT ROTATIF AVEC DOIGT SE DEPLACANT SUR UN CHEMIN FORMANT CAME**
ROTATIONSÜBERTRAGUNGSVORRICHTUNG MIT SICH AUF EINEM KURVENFORMENDEM PFAD BEWEGENDEN FINGER
ROTARY TRANSFER DEVICE WITH FINGER MOVING ON A CAM-FORMING PATH

(30) Priorité: 08.07.2004 FR 0407643
(43) Date de publication de la demande: 02.05.2007
(73) Titulaire: COMAU SYSTEMES FRANCE, 78191 Trappes (FR)
(72) Inventeur: AZEMA, André, F-81710 Saix (FR)
(74) Mandataire: Thurgood, Alexander John
(86) Numéro de dépôt international: PCT/FR2005/050546
(87) Numéro de publication internationale: WO 2006/005888

(56) Documents cités:
- EP-A- 0 748 669
- FR-A- 2 789 925
- US-A- 5 684 369

## Description

### DOMAINE D'APPLICATION DE L'INVENTION

La présente invention a trait au domaine de la manipulation et du déplacement des pièces et notamment aux adaptations permettant de faire réaliser à un dispositif porte pièces un mouvement rotatif dans les meilleures conditions (voir, par exemple, US-5 684 369-A).

### DESCRIPTION DE L'ART ANTÉRIEUR

Les dispositifs porte-pièce(s), palettiseurs ou de transferts sont utilisés pour assurer le déplacement des pièces selon une gamme de fabrication d'un poste opérationnel à un autre.

Dans certaines configurations, le mouvement de transfert consiste en un simple mouvement rotatif de la pièce d'un poste à un autre. Toutefois, ce mouvement de rotation est classiquement accompagné de mouvements en translation pour dégager ou engager la pièce ou le dispositif porte-pièce(s) sur des moyens d'accueil, de mise en position et/ou de maintien en position

Les systèmes palettiseurs de l'art antérieur sont constitués de plusieurs actionneurs pour assurer le mouvement rotatif des palettes porte-pièce(s). Ainsi, il est classique de faire réaliser à un premier actionneur de dégagement une translation vers le haut du sous-ensemble porte-pièce(s) avant de faire réaliser le mouvement de rotation à un deuxième actionneur puis de commander le premier actionneur pour mettre en position l'ensemble mis en mouvement dans le nouveau poste.

Cette multiplication de composants exige une pluralité de détecteurs pour chaque mouvement décomposé. Cette multiplication de moyens de détection a pour inconvénient de rallonger la durée du temps de cycle de l'opération de transfert rotatif.

En outre, la multiplication des différents sous-ensembles fonctionnels, aussi bien des actionneurs que des détecteurs, augmente le coût d'un tel dispositif.

### BRÈVE DESCRIPTION DE L'INVENTION

Partant de cet état de fait, la demanderesse a mené des recherches visant à obvier aux inconvénients de l'art antérieur.

Ces recherches ont abouti à la conception et à la réalisation d'un dispositif de transfert rotatif des pièces présentant non seulement un nombre réduit d'actionneurs mais également un temps de cycle plus court.

Selon l'invention, qui est définie par la revendication 1, le dispositif simplifié de transfert rotatif de pièce(s) est remarquable en ce qu'il est constitué par un sous-ensemble porte-pièce(s) qui, assurant le support et le transfert rotatif d'une ou plusieurs pièces, est solidaire d'un arbre de commande dont le mouvement est mis en oeuvre par le déplacement relatif d'au moins un doigt s'étendant radialement à partir de l'arbre sur un chemin formant came. Le dégagement et la rotation du sous-ensemble porte pièce sont donc assurés par un seul et même actionneur. En effet, en utilisant une came, le déplacement dudit doigt dans le chemin va assurer audit arbre de commande un mouvement selon deux axes l'autorisant non seulement à réaliser les mouvements de translation pour le dégagement ou l'engagement du sous-ensemble porte-pièce(s) mais également à assurer le mouvement de rotation nécessaire au transfert des pièces d'une position à une autre.

Selon une caractéristique particulièrement avantageuse de l'invention, le dispositif est constitué par un moyen de mise en mouvement en translation de l'arbre de commande, libre en rotation axiale et équipé d'un doigt s'étendant radialement qui se déplace selon un chemin fixe de façon à ce que la translation de l'arbre assure également sa rotation par passage du doigt à l'intérieur dudit chemin. Le mouvement transformé en translation et rotation est donc mis en oeuvre par un seul moyen de mise en mouvement en translation.

Selon une autre caractéristique particulièrement avantageuse de l'invention, ledit doigt se déplace à l'intérieur d'une piste profilée ménagée dans un cylindre fixe dit cylindre came à l'intérieur duquel se déplace ledit arbre de commande selon un mouvement combiné de translation et de rotation.

Selon une caractéristique particulièrement avantageuse de l'invention, le chemin est préformé de façon ce que l'arbre de commande réalise selon un cycle aller et retour, les mouvements suivants :
- un mouvement de translation vers le haut,
- un mouvement combiné de translation et de rotation, puis
- un mouvement de translation vers le bas.

L'extrémité de l'arbre de commande étant fixée au sous-ensemble porte-pièce(s), ce dernier suit les mêmes mouvements. La réalisation d'un chemin autorisant dans un premier temps et en fin de cycle, une translation axiale de l'arbre de commande à des fins de dégagement est particulièrement importante dans le cadre de l'application de l'invention qui nécessite des mouvements de dégagement et d'engagement. Toutefois pour certaines application, il est possible qu'un mouvement latéral des pièces soit nécessaire en fin et début de course de transfert. Aussi, pour répondre à cette nécessité, le chemin sera ménagé pour que le doigt et en conséquence les pièces puissent suivre un tel mouvement latéral.

Selon une autre caractéristique particulièrement avantageuse de l'invention, le sous-ensemble porte-pièce(s) est constitué d'un plateau dont deux côtés opposés sont aménagés chacun d'un berceau préformé pour accueillir un vilebrequin.

Selon une autre caractéristique particulièrement avantageuse de l'invention, le moyen de mise en mouvement en translation est un vérin.

Le mouvement de translation du vérin assure une translation à ladite tige et donc le déplacement du doigt y associé à l'intérieur d'une piste ménagée dans un cylindre, déplacement qui entraîne simultanément en rotation ladite tige permettant de faire suivre alternativement au sous-ensemble porte-pièce(s) associé à la tige (ici un porte vilebrequins) un mouvement de translation vers le haut, une rotation puis un mouvement de translation vers le bas.

Ce dispositif a donc pour avantage de mettre en oeuvre pour une même fonction moins d'actionneurs, moins de capteurs le rendant ainsi, moins coûteux et plus rapide résolvant ainsi les inconvénients de l'art antérieur.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est un dessin schématique d'une vue extérieure en perspective d'un mode de réalisation du dispositif de l'invention,
La figure 2 est un dessin schématique d'une vue extérieure de côté du mode de réalisation illustré en figure 1,
La figure 3 est un dessin schématique d'une vue en coupe de face selon le plan de coupe AA illustré en figure 2,
La figure 4 est un dessin schématique d'une vue extérieure de face du seul cylindre came.

### DESCRIPTION DES MODES DE RÉALISATION PRÉFÉRÉS

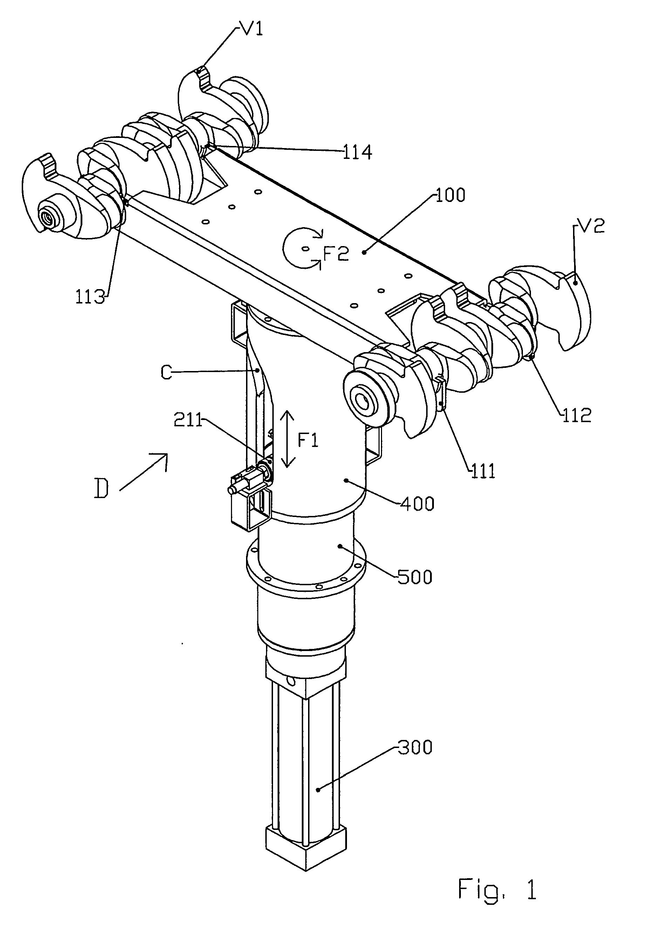

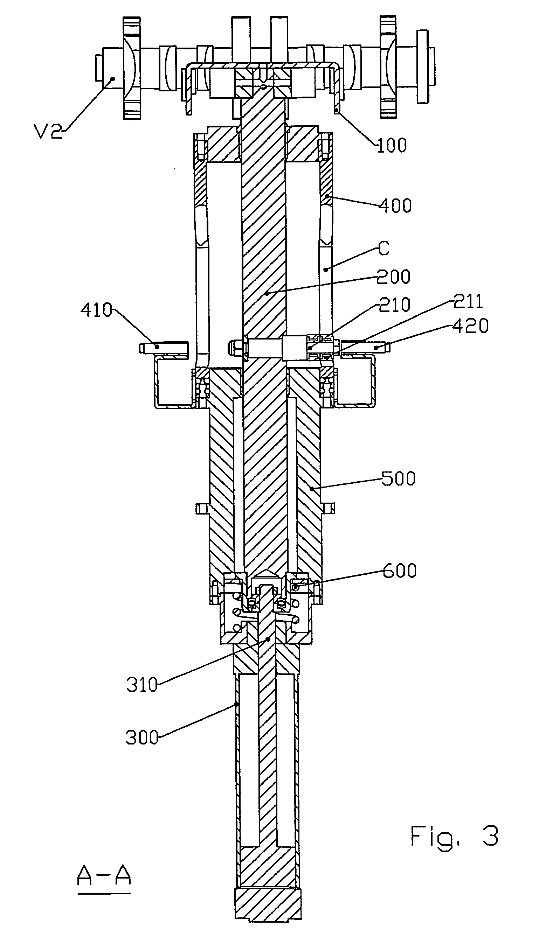

Tel qu'illustré sur le dessin des figures 1, 2 et 3, le dispositif de transfert rotatif de l'invention référencé D dans son ensemble est adapté pour le transfert rotatif de vilebrequins référencés V1 et V2. Ce dispositif D peut être installé par exemple entre un poste d'équilibrage et un poste de mesure de balourd.

Ce dispositif D est constitué par un sous-ensemble porte-pièces 100 qui assure le support des vilebrequins V1 et V2. Ce sous-ensemble porte-pièces 100 est fixé à l'extrémité d'un arbre de commande 200 dont les mouvements de translation et de rotation combinés illustrés par les double flèches F1 et F2 sont mis en oeuvre par le déplacement relatif d'au moins un doigt 210 s'étendant radialement à partir de l'arbre 200 sur un chemin référencé C formant came. Le sous-ensemble porte-pièces 100 est constitué d'un plateau 110 dont deux côtés opposés sont aménagés chacun d'un berceau constitué chacun par deux paliers 111, 112 et 113, 114 préformés pour accueillir des vilebrequins V1 et V2.

Comme illustré et conformément à l'invention, le dispositif D est constitué par un moyen de mise en mouvement en translation, ici un vérin 300, dont la rentrée et la sortie de tige commande le mouvement en translation de l'arbre de commande 200 qui est selon l'invention, libre en rotation axiale et équipé d'un doigt 210 s'étendant radialement qui se déplace selon un chemin C fixe de façon à ce que la translation de l'arbre 200 assure également sa rotation par passage du doigt 210 à l'intérieur dudit chemin C.

Comme illustré, ledit doigt 210 qui s'étend radialement par rapport à l'arbre de commande se déplace sous l'action du vérin à l'intérieur d'un chemin C formant une piste ou une rampe profilée ménagée dans un cylindre 400 fixe dit cylindre came à l'intérieur duquel se déplace ledit arbre de commande 200.

Comme illustrée, l'extrémité de la tige 310 du vérin 300 forme une liaison pivot avec l'extrémité basse dudit arbre de commande 200 qui forme une liaison pivot glissant avec le cylindre came 400.

Plus précisément, selon le mode de réalisation non limitatif illustré, le dispositif D comprend de bas en haut, un vérin 300 dont la tige 310 vient commander la mise en mouvement en translation de l'arbre de commande 200 qui est en liaison de type pivot glissant avec une colonne 500 dont la partie basse est fixe par rapport au corps du vérin 300 et dont la partie haute est fixée au cylindre came 400.

Le déplacement en translation de l'arbre de commande 200 oblige le doigt 210 à suivre le chemin C , déplacement linéaire transformant le mouvement de translation de l'arbre en un mouvement combiné associant également une rotation.

Selon le mode de réalisation illustré, ledit doigt 210 est équipé à son extrémité d'un galet 211 qui vient en contact avec le chemin C ménagé dans le cylindre 400 pour en faciliter le déplacement.

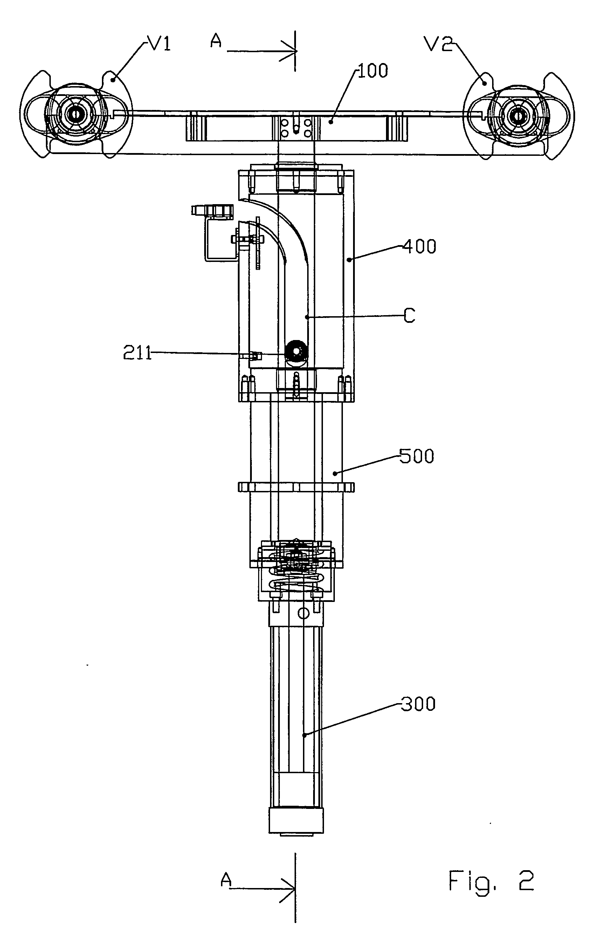

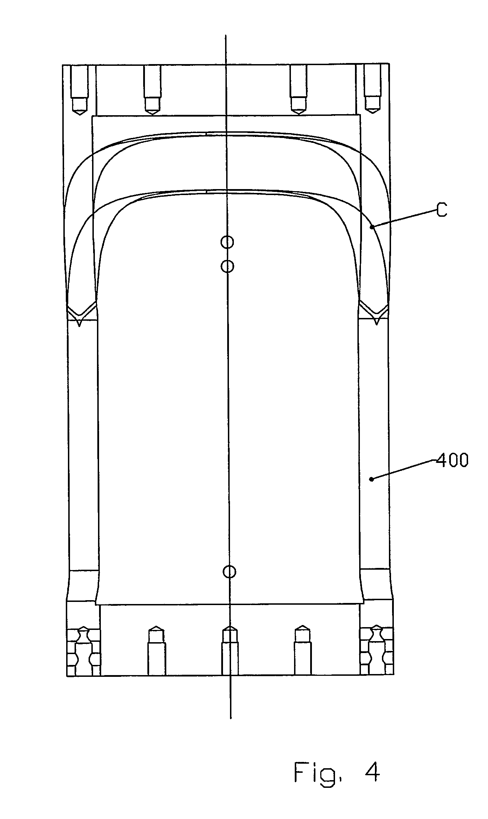

Conformément à l'invention et comme illustré sur les dessins des figures 2 et 4, le chemin C est préformé de façon ce que l'arbre de commande 200 réalise dans son cycle les mouvements suivants :
- un mouvement de translation vers le haut,
- un mouvement combiné de translation et de rotation, puis
- un mouvement de translation vers le bas.

Ainsi, avec un seul actionneur c'est à dire le vérin 300, le dispositif D assure les deux types de mouvement nécessaires au transfert rotatif des pièces.

Comme illustré, le chemin C ménagé dans le cylindre came 400 se décompose en plusieurs parties :
- deux parties verticales dont la longueur est suffisante pour permettre le dégagement par le haut des vilebrequins,
- une partie elliptique au milieu de laquelle se trouve le plan de symétrie du chemin C et le point le plus haut de la course du doigt 210, cette partie elliptique étant disposée entre les deux parties verticales.

La partie elliptique et les deux parties verticales sont disposées les unes par rapport aux autres pour permettre un mouvement alterné aller-retour de rotation selon un angle de 180°. Bien entendu selon l'application le chemin C peut adopter une géométrie différente et permettre des courses plus ou moins longues en regard de celle illustrée. De même, le nombre de doigts et le nombre de chemins dépendent de l'angle que doit réaliser le sous-ensemble porte pièce(s).

Conformément à l'invention, le dispositif est équipé au niveau du cylindre came 400 de détecteurs 410 et 420 de la position de la fin de course dudit doigt 210. Ces détecteurs sont donc disposés en extrémité basse des parties verticales du chemin C pratiqué dans le cylindre came 400.

Selon un mode de réalisation préféré, le vérin 300 est du type simple effet et seul le mouvement vers le haut est motorisé alors que le mouvement vers le bas est réalisé par l'inertie de l'ensemble porte-pièce. Ainsi, la sortie de tige assure la moitié de la course et l'énergie cinétique du sous-ensemble tournant assure audit doigt 210 le dépassement de l'extrémité haute du chemin C autorisant par sa masse son déplacement vers le bas et en conséquence sa rotation et son retour en position basse. Selon un mode de réalisation préféré, le vérin est du type pneumatique ce qui contribue à la vélocité de l'élément mobile constitué par le sous-ensemble porte-pièces.

Selon une autre caractéristique de l'invention, le dispositif D est équipé d'un vérin double effet et d'un détecteur de milieu de course dudit doigt 210 pour assurer l'amortissement de la fin du mouvement de translation vers le bas.

Afin de proposer une position intermédiaire entre la position haute et la position basse, un moyen élastique 600 est associé à l'arbre de commande 200 de façon à ce que lorsque la pression est relâchée dans le vérin 300, le ressort amène l'arbre de commande 200 et donc le sous-ensemble porte pièce(s) 100 dans une position se situant entre le point de course bas et le point de course haut. L'utilisation de ce ressort permet de proposer une position intermédiaire au début et fin de course sans utilisation d'actionneurs supplémentaires.

On comprend que le dispositif simplifié de transfert rotatif de pièces, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention, tel que défini dans les revendications ci-jointes.

## Revendications

1. Dispositif (D) simplifié de transfert rotatif de pièce(s) (V1, V2), constitué par un sous-ensemble (100) porte pièce(s) (V1, V2) qui, assurant le support et le transfert rotatif d'une ou plusieurs pièces, est solidaire d'un arbre de commande (200) dont le mouvement est mis en oeuvre par le déplacement relatif d'au moins un doigt (210) transversal lié à l'arbre (200) sur un chemin (C) formant came, **CARACTÉRISÉ PAR LE FAIT QU**'il est constitué d'un moyen de mise en mouvement en translation de l'arbre de commande (200), libre en rotation axiale et équipé d'un doigt (210) s'étendant radialement qui se déplace selon un chemin (C) fixe de façon à ce que la translation de l'arbre (200) assure également sa rotation par passage du doigt (210) à l'intérieur dudit chemin (C), ledit doigt (210) se déplaçant à l'intérieur d'une piste profilée (C) ménagée dans un cylindre fixe (400) dit cylindre came à l'intérieur duquel se déplace ledit arbre de commande (200).

2. Dispositif (D) selon la revendication 1, **CARACTÉRISÉ PAR LE FAIT QUE** le moyen de mise en mouvement en translation est un vérin (300).

3. Dispositif (D) selon la revendication 1, **CARACTÉRISÉ PAR LE FAIT QUE** le chemin (C) est préformé de façon à ce que l'arbre de commande (200) réalise dans son cycle, les mouvements suivants :
- un mouvement de translation vers le haut,
- un mouvement combiné de translation et de rotation, puis
- un mouvement de translation vers le bas.

4. Dispositif (D) selon la revendication 1, **CARACTÉRISÉ PAR LE FAIT QU**'il est équipé de détecteurs (410 et 420) de la position de la fin de course dudit doigt (210).

5. Dispositif (D) selon la revendication 2, **CARACTÉRISÉ PAR LE FAIT QU**'il est équipé d'un vérin double effet et d'un détecteur de milieu de course dudit doigt (210) pour assurer l'amortissement de la fin du mouvement de translation vers le bas.

6. Dispositif (D) selon la revendication 1, **CARACTÉRISÉ PAR LE FAIT QUE** le sous-ensemble porte-pièce(s) est constitué d'un plateau dont deux côtés opposés sont aménagés chacun d'un berceau préformé pour accueillir un vilebrequin.

7. Dispositif (D) selon la revendication 2, **CARACTÉRISÉ PAR LE FAIT QUE** l'extrémité de la tige (310) du vérin (300) forme une liaison pivot avec l'extrémité basse dudit arbre de commande (200) qui forme une liaison pivot glissant avec le cylindre came (400).

8. Dispositif (D) selon la revendication 2, **CARACTÉRISÉ PAR LE FAIT QU**'un moyen élastique (600) est associé à l'arbre de commande (200) de façon à ce que lorsque la pression est relâchée dans le vérin (300), le ressort amène l'arbre de commande (200) et donc le sous-ensemble porte pièce(s) (100) dans une position se situant entre le point de course bas et le point de course haut.

## Claims

1. Simplified device (D) for rotary transfer of part(s) (V1, V2), consisting of a part(s) (V1, V2) holding sub-assembly (100) which, ensuring the support and rotary transfer of one or more parts, is integral with an operating shaft (200) whose movement is brought about by the relative displacement of at least one transverse finger (210) connected to the shaft (200) on a cam-forming path (C), **characterised by** the fact that it consists of a means for moving the operating shaft (200) translationally, which is free in axial rotation and equipped with a finger (210) extending radially, which moves along a stationary path (C) so that the translational movement of the shaft (200) also ensures its rotation via the passage of the finger (210) inside of said path (C), said finger (210) moving inside a shaped track (C) provided in a stationary cylinder (400) called a cam cylinder, inside of which said operating shaft (200) moves.

2. Device (D) according to claim 1, **characterised by** the fact that the means for translational movement is a jack (300).

3. Device (D) according to claim 1, **characterised by** the fact that the path (C) is preformed so that the operating shaft (200) carries out the following movements during its cycle:
- an upward translational movement,
- a combined translational and rotational movement, then
- a downward translational movement.

4. Device (D) according to claim 1, **characterised by** the fact that it is equipped with sensors (410 and 420) for the end-of-travel position of said finger (210).

5. Device (D) according to claim 2, **characterised by** the fact that it is equipped with a double acting jack and a mid-travel position sensor for said finger (210), in order to ensure dampening at the end of the downward translational movement.

6. Device (D) according to claim 1, **characterised in that** the part(s)-holding sub-assembly consists of a plate whose two opposing sides are each provided with preformed cradle for receiving a crankshaft.

7. Device (D) according to claim 2, **characterised by** the fact that the end of the rod (310) of the jack (300) forms a pin joint with the bottom end of said operating shaft (200), which forms a sliding pin joint with the cam cylinder (400).

8. Device (D) according to claim 2, **characterised in that** an elastic means (600) is associated with the operating shaft (200) so that, when the pressure is released inside the jack (300), the spring brings the operating shaft (200), and thus the part(s)-holding sub-assembly (100), into a position situated between the bottom stroke position and the top stroke position.

## Patentansprüche

1. Vereinfachte Vorrichtung (D) für den Drehtransfer von (einem) Werkstück(en) (V1, V2), bestehend aus einer Werkstück(e) (V1, V2) tragenden Untergruppe (100), die die Auflage und den Drehtransfer von einem oder mehreren Werkstücken sicherstellt und mit einer Antriebswelle (200) verbunden ist, deren Bewegung durch die relative Verschiebung von zumindest einem quer laufenden Zapfen (210), der mit der Welle (200) verbunden ist, auf einer Kurvenbahn (C) veranlasst wird, **dadurch gekennzeichnet, dass** sie mit einem Mittel ausgestattet ist, das die Verschiebung der Antriebswelle (200) bewirkt und das axial frei drehbar und mit einem Zapfen (210) ausgestattet ist, der sich radial erstreckt und sich gemäß einer feststehenden Bahn (C) so bewegt, dass die Verschiebung der welle (200) auch seine Drehung durch das Passieren des Zapfens (210) im Inneren der besagten Bahn (C) sicherstellt, wobei sich der besagte Zapfen (210) im Inneren einer profilierten Spur (C) bewegt, die in einem feststehenden Zylinder (400), einem so genannten Kurvenzylinder, eingerichtet ist, in dessen Innerem sich die besagte Antriebswelle (200) bewegt.

2. Vorrichtung (D) nach Anspruch 1, **dadurch gekennzeichnet, dass** das Mittel, das die Verschiebung bewirkt, ein Zylinder (300) ist.

3. Vorrichtung (D) nach Anspruch 1, **dadurch gekennzeichnet, dass** die Bahn (C) so vorgeformt ist, dass die Antriebswelle (200) während ihres Zyklus folgende Bewegungen ausführt:
- eine Verschiebungsbewegung nach oben,
- eine Kombination aus Verschiebungs- und Drehbewegung, und
- eine Verschiebungsbewegung nach unten.

4. Vorrichtung (D) nach Anspruch 1, **dadurch gekennzeichnet, dass** sie mit Stellungsgebern (410 und 420) für das Wegende des besagten Zapfens (210) ausgestattet ist.

5. Vorrichtung (D) nach Anspruch 2, **dadurch gekennzeichnet, dass** sie mit einem doppelt wirkenden Zylinder und mit einem Stellungsgeber für die Wegmitte des besagten Zapfens (210) ausgestattet ist, um die Dämpfung am Ende der Verschiebungsbewegung nach unten sicherzustellen.

6. Vorrichtung (D) nach Anspruch 1, **dadurch gekennzeichnet, dass** die Werkstück(e) tragende Untergruppe aus einer Platte besteht, deren zwei gegenüberliegende Seiten jeweils mit einer vorgeformten Wiege versehen sind, um eine Kurbelwelle aufzunehmen.

7. Vorrichtung (D) nach Anspruch 2, **dadurch gekennzeichnet, dass** das Ende der Stange (310) des Zylinders (300) mit dem unteren Ende der besagten Antriebswelle (200) ein Zapfengelenk bildet, die ihrerseits ein Drehschubgelenk mit dem Kurvenzylinder (400) bildet.

8. Vorrichtung (D) nach Anspruch 2, **dadurch gekennzeichnet, dass** ein elastisches Mittel (600) mit der Antriebswelle (200) so verbunden ist, dass, sobald der Druck im Zylinder (300) freigelassen wird, die Antriebswelle (200) und somit auch die Werkstück(e) tragende Untergruppe (100) von der Feder in eine Position gebracht werden, die sich zwischen dem unteren Wegpunkt und dem oberen Wegpunkt befindet.
